# EUROPÄISCHE PATENTANMELDUNG

(11) **EP 2 135 844 A1**
(43) Veröffentlichungstag der Anmeldung: **23.12.2009**
(21) Anmeldenummer: 08158401.3
(22) Anmeldetag: 17.06.2008
(51) Int. Cl.: C01B 33/04

(54) **Verfahren zur Herstellung höherer Hydridosilane**

(71) Anmelder: Evonik Degussa GmbH, 45128 Essen (DE)
(72) Erfinder: Brausch, Nicole, Dr., 45657 Recklinghausen, (DE); Ebbers, André, Dr., 44793 Bochum, (DE); Stochniol, Guido, Dr., 45721 Haltern am See, (DE); Trocha, Martin, Dr., 45136 Essen, (DE)

(57) **Zusammenfassung**

Verfahren zur Herstellung höherer Hydridosilane der allgemeinen Formel H-(SiH₂)ₙ-H wobei n ≥ 2 ist, bei dem man
- ein oder mehrere niedere Hydridosilane
- Wasserstoff und
- ein oder mehrere Übergangmetallverbindungen umfassend Elemente der VIII. Nebengruppe des Periodensystems und der Lanthanoide,

bei einem Druck von mehr als 5 bar absolut zur Reaktion bringt, nachfolgend entspannt und vom erhaltenen Reaktionsgemisch die höheren Hydridosilane abtrennt.

## Beschreibung

Die Erfindung betrifft ein Verfahren zur Herstellung von höheren Hydridosilanen mittels einer Dehydropolymerisationsreaktion niederer Hydridosilane. Die Erfindung betrifft weiterhin die Verwendung der höheren Hydridosilane als Ausgangsmaterial zur Herstellung von Silicium.

Die Dehydropolymerisierung niederer Hydridosilane zu höheren Hydridosilanen stellt einen vielversprechenden Zugang zu Silicium dar. Unter Hydridosilanen, gemäß der Erfindung, sind Verbindungen zu verstehen, die lediglich Silicium- und Wasserstoffatome enthalten und eine lineare, verzweigt oder cyclische Struktur mit Si-H-Bindungen aufweisen. Als Beispiele seien Monosilan, Disilan, Trisilan, Cyclopentasilan genannt.

In US4965386 wird ein Verfahren offenbart, bei dem als Katalysator hydridische Cyclopentadienyl-Komplexe von Scandium, Yttrium oder der seltenen Erden eingesetzt werden. Die Praxis zeigt, dass dieses ein geeignetes Verfahren zur Herstellung von Alkyl- und Arylsilanen darstellt, also von Verbindungen, die wenigstens eine Kohlenstoff-Silicium-Verbindung aufweisen. Für höhere Hydridosilane hingegen liefert dieses Verfahren keine wirtschaftlich brauchbaren Ausbeuten.

Gleiches wurde für das in US5252766 offenbarte Verfahren festgestellt bei dem Alkyl- und Arylsilane in Gegenwart von Cyclopentadienyl-Komplexen der Lanthanoide zu den entsprechenden Polyalkylbeziehungsweise Polyarylsilanen umgesetzt wird. Der Einsatz von niederen Hydridosilanen führt dagegen nicht in nennenswerten Mengen zu den gewünschten höheren Hydridosilanen. Vielmehr entstehen unerwünschte, polymere Feststoffe, die zur Selbstentzündung neigen.

In JP 02-184513 wird ein Verfahren offenbart, bei dem ausgehend von Monosilan die Produkte Disilan, Trisilan oder ein Gemisch der beiden durch eine übergangsmetallkatalysierte Reaktion erhalten werden. Das Verfahren führt nicht zur Bildung höherer Silane.

In US6027705 wird ein thermisches Verfahren zur Herstellung höherer Hydridosilane, ausgehend von Monosilan oder niederen Hydridosilanen, offenbart. Das Verfahren soll bei Temperaturen ab Raumtemperatur zu höherer Hydridosilanen führen. In der Praxis sind Temperaturen von mehr als 300°C notwendig, um nennenswerte Umsätze zu erzielen. Nachteilig an diesem Verfahren ist die hohe thermische Belastung, welche Neben- und Zersetzungsreaktionen begünstigt.

Es sind also verschiedene Verfahren zur Herstellung von höheren Hydridosilanen bekannt, die auf der Dehydropolymerisierung niederer Hydridosilanen beruhen. Die Umsetzung erfolgt entweder thermisch oder durch Übergangsmetalle katalysiert. Die bekannten Verfahren sind jedoch nicht zu wirtschaftlichen Herstellung dieser Produkte geeignet. Oft entstehen selbstentzündliche Nebenprodukte, die die Aufarbeitung erschweren und die Produkte kontaminieren.

Aufgabe der vorliegenden Erfindung war es daher, ein Verfahren bereitzustellen, das die wirtschaftliche Herstellung von höheren Hydridosilanen erlaubt und die Nachteile des Standes der Technik weitestgehend vermeidet.

Gegenstand der Erfindung ist ein Verfahren zur Herstellung höherer Hydridosilane der allgemeinen Formel H-(SiH₂)ₙ-H wobei n ≥ 2 ist, bei dem man
- ein oder mehrere niedere Hydridosilane
- Wasserstoff und
- ein oder mehrere Übergangmetallverbindungen umfassend Elemente der VIII. Nebengruppe des Periodensystemes und der Lanthanoide,
bei einem Druck von mehr als 5 bar absolut zur Reaktion bringt, nachfolgend entspannt und vom erhaltenen Reaktionsgemisch die höheren Hydridosilane abtrennt.

Gemäß der Erfindung umfassen niedere Hydridosilane Monosilan (SiH₄) oder ein Gemisch, das neben Monosilan noch Anteile höherer Hydridosilane enthält. Der Anteil an höheren Hydridosilanen kann bis zu 60 mol%, in der Regel 5 bis 20 mol%, bezogen auf das Gemisch betragen. Aufgrund der Verfügbarkeit kann man bevorzugt Monosilan einsetzen.

Höhere Hydridosilane gemäß der Erfindung umfassen Gemische von Hydridosilanen gemäß der Formel H-(SiH₂)ₙ-H, wobei n ≥ 2 ist. Gewöhnlich enthalten die Gemische höhere Hydridosilane mit 2 ≤ n ≤ 20, es können aber in Abhängigkeit von der Reaktionsführung auch höhere Hydridosilane mit n > 20 erhalten werden. Bevorzugt ist ein Gemisch mit
2 ≤ n ≤ 20, besonders bevorzugt ist ein Gemisch mit 2 ≤ n ≤ 10. Ein solches Gemisch enthält in der Regel Si₂H₆, Si₃H₈, n-Si₄H₁₀, n-Si₅H₁₂, n-Si₆H₁₄ als Hauptkomponenten, neben gegebenenfalls n-Si₇H₁₆, n-Si₈H₁₈, n-Si₉H₂₀ und n-Si₁₀H₂₂ als Nebenkomponenten.

Weitere Nebenkomponenten können verzweigte Hydridosilane, wie beispielsweise i-Si₆H₁₄, oder cyclische Hydridosilane, wie beispielsweise Cyclopentahydridosilan (cyclo-Si₅H₁₀), sein. Der Anteil dieser Nebenkomponenten kann in Summe maximal 10 Gew.-%, in der Regel maximal 5 Gew.-%, bevorzugt maximal 2 Gew.-%, jeweils bezogen auf die Summe der Hydridosilane und der Nebenkomponenten. Diese Werte basieren auf Schätzungen, da nicht für alle Nebenkomponente Eichsubstanzen vorliegen.

Ein weiterer essentieller Einsatzstoff bei dem erfindungsgemäßen Verfahren ist Wasserstoff. Wasserstoff kann getrennt oder gemeinsam mit den niederen Hydridosilanen in den Reaktionsbehälter gegeben werden. Es wurde gefunden, dass die Gegenwart von Wasserstoff zu höheren Ausbeuten von höheren Hydridosilanen führt und die Bildung von Feststoff vermindert, beziehungsweise ganz verhindert wird. Die Bildung von Feststoff ist auch deshalb unerwünscht, da sich dieser bei der Aufarbeitung des Reaktionsgemisches oft selbst entzündet und damit ein erhebliches Sicherheitsrisiko darstellt. Die genaue Struktur dieses Feststoffes ist bislang nicht bekannt.

Der Anteil an Wasserstoff ist zunächst nicht limitiert. Er richtet sich nach den Einsatzstoffen, niedere Hydridosilane und Katalysator, sowie den Reaktionsbedingungen, Druck und Temperatur. Der Partialdruck des Wasserstoffes beträgt 5-200% des Druckes der eingesetzten Hydridosilane. In der Regel wird der Anteil an Wasserstoff so gewählt, dass der Partialdruck des Wasserstoffes wenigstens 5% des Gesamtdruckes entspricht. Bevorzugt ist ein Bereich von 5% bis 80%, besonders bevorzugt ein Bereich von 15% bis 50%.

Weiterhin können auch nicht reaktive Gase, wie Stickstoff, Argon oder Helium, zum Verdünnen des Reaktionsgemisches eingesetzt werden.

Ein weiterer essentieller Bestandteil des erfindungsgemäßen Verfahrens sind ein oder mehrere Übergangmetallverbindungen umfassend Elemente der VIII. Nebengruppe des Periodensystemes, nämlich Fe, Co, Ni, Ru, Rh, Pd, Re, Os, Ir, Pt und der Lanthanoide, nämlich Ce, Pr, Nd, Pm, Sm, Eu, Gd, Tb, Dy, Ho, Er, Tm, Yb, Lu.

Die Übergangsmetallverbindungen werden in der Regel in Form eines Precusors eingesetzt. Der Ligand wird separat zugegeben, so dass der Katalysator in-situ gebildet wird. Es können allerdings auch kommerziell erwerbliche Katalysatoren zum Einsatz kommen.

Gängige Precusoren die zum Einsatz kommen sind z.B. Metallsalze wie Chloride, Bromide, Iodide, Fluoride, Acetate, Acetylacetonate, Sulfate, Sulfonate, Nitrate, Phosphate, Trifluormethansulfonate, Alkoholate, Hexafluorophosphate, Carbonyle, Carboxylate, oder Metallprecusoren mit M = Fe, Co, Ni, Ru, Rh, Pd, Re, Os, Ir, Pt und der Lanthanoide, nämlich Ce, Pr, Nd, Pm, Sm, Eu, Gd, Tb, Dy, Ho, Er, Tm, Yb, Lu.

M(COD)ₓ mit COD = 1,5-Cyclooctadien,
M(C₈H₁₂) (C₅H₇O₂), mit C₈H₁₂ = 1,5 Cyclooctadien und C₅H₇O₂ = Acetylacetonato
M(CO)x(C₅H₇O₂), mit C₅H₇O₂ = Acetylacetonato Metallcarbonyle, MCl(CO)x, [MClx(CO)y]₂, M(allyl)Cl,
MCl(C₇H₈), mit C₇H₈ = Norbornadien
M(C₈H₁₂)₂(BF₄)ₓ, mit C₈H₁₂ = 1,5 Cyclooctadien M(C₇Hg)₂(BF₄)ₓ, mit C₇H₈ = Norbornadien
[M(1,5-C₈H₁₂)Cl]₂, mit 1,5-C₈H₁₂ =1,5 Cyclooctadien M(Cp)₂, mit Cp = unsubstiuiertes oder alkylsubstituiertes Cyclopentadienyl
M(C₄H₇)₂(C₈H₁₂), mit C₄H₇ = methylallyl und C₈H₁₂ = 1,5 Cyclooctadien, [M(O₂CCH₃)x]₂ mit (O₂CCH₃)= Acetat,
wobei M jeweils das Übergangsmetall darstellt. x hängt von der Wertigkeit des Übergangsmetalles ab.

Die Liganden der Übergangsmetallverbindungen können bevorzugt Halogen, Wasserstoff, Alkyl, Aryl, Alkylsilane, Arylsilane, Olefin, Alkylcarboxyl, Arylcarboxyl, Acetylacetonatoalkoxyl, Aryloxy, Alkylthio, Arylthio, substituiertes oder unsubstituiertes Cyclopentadienyl, Cyanoalkan, aromatische Cyanoverbindungen, CN, CO, NO, Alkylamin, Arylamine, Pyridin, Alkylphosphin, Arylphosphin, Alkylarylphosphin, Alkylphosphite, Arylphosphite, Alkylstiban, Arylstiban, Alkylarylstiban, Alkylarsan, Arylarsan oder Alkylarylarsan sein.

Besonders bevorzugte Liganden sind: Bipyridyl, unsubstituiertes oder substituiertes Cyclopentadienyl, Cyclooctadien, CN, CO, Alkylphosphin, Arylphosphine, Alkyl- oder Arylphosphite, Alkylarylphosphin, bidentate Phosphinliganden mit verbrückenden Heterocyclen oder verbrückenden Arylresten,einen heteroatomhaltigen Liganden, besonders bevorzugt einen phosphorhaltigen Liganden, der die Fähigkeit Atropisomerie bezüglich zweier Aryl- bzw. Hetarylsysteme auszubilden aufweist, Alkyldiphosphin R²R¹-P(CH_{y})ₓP-R³R⁴, wobei R¹, R², R³ und R⁴ unabhängig voneinander Alkyl oder Aryl und x = 1-10 ist und y=0,1 oder 2 sein kann, R²R¹-P-CR⁵R⁶(CR⁷R⁸)x-CR⁹R¹⁰-P-R³R⁴ wobei R¹, R², R³, R⁴, R⁵, R⁶, R⁷, R⁸, R⁹, R¹⁰ unabhängig voneinander H, Alkyl oder Aryl und x = 1-10 ist; R¹-C≡C-R², wobei R¹ und R² unabhängig voneinander Alkylphosphine oder Arylphosphine sind.

Als kommerziell erhältliche Katalysatoren können z.B. Bis(cyclopentadienyl)nickel(Nickelocene), Bis(cyclopentadienyl)titanium dichloride, Bis(cyclopentadienyl)zirconium dichloride(Zirconocene dichloride), 1,1'-Bis(diphenylphosphino)ferrocene, Bis(triphenylphosphine)nickel(II)chloride, Carbonyl(dihydrido)tris(triphenylphosphine)ruthenium(II ), Carbonylchlorohydridotris(triphenylphosphine)ruthenium (II), Chlorotris(triphenylphosphine)rhodium (I) (Wilkinson Katalysator), Dimethylbis(t-butylcyclopentadienyl)zirconium, Bis(triphenylphosphine)nickel dicarbonyl eingesetzt werden.

Beispielsweise können die folgenden Verbindungen eingesetzt werden: Ni[Pₕ2P(_{C}H₂)₃PPh₂]Me₂, Ni[Ph₂P(CH₂)₃PPh₂]Cl₂, Ni(PPh₃)₂Me₂, Ni(PPh₃)₂Cl₂, Ni(PMe₂Ph)₂Me₂, Ni(COD)₂, NiEt₂, Ni(CNMe)(CO)₃, Ni(Cp)Cl₂, Ni(Cp)I₂, Ni(Cp)NO, Ni(CF₃C≡CCF₃)(CO)₂, Ni(Cp)(CN)₂, Ni(Cp)(CO)I, Ni(πCH₂=CHCH₂)₂, Ni(Cp) (CO)CF₃, Ni(NCCH=CHCN)₂, Ni(Cp)(CO)C₂F₅, Ni(cyclooctatetraen), Ni(Cp)(πCH=CHCH₂), Ni(EtNC)₂(CN)₂, Ni(MeNC)₄, Ni(Cp)(PPh₃)Cl, Ni(CH₂=CH₂)(PEt₃)₂, Ni(Cp)(PPh₃)Et, Ni[Ph₂P(CH₂)₂PPh₂]BrMe, Ni[PhP(CH₂)₃PPh₂]BrMe, Ni(CH2=CH2)(PPh₃)₂, Ni(AN)(PPh₃), (πCH₂=CHCH₂)NiCl)₂, (πCH₂=CHCH₂NiBr)₂, [Ni(Cp)(CO)]₂, [Ni(Cp)]₂HC≡CH, [Ni(Cp)]₂HC≡CCH₃, [Ni(Cp)]₂CH₃C≡CCH₃, Ni(dip)Cl₂, Ni(dip)Br₂, Ni(dip)ClMe, Ni(dip)Me₂, Ni(dip)Et₂, NiCp₂, Ni(CO)₄, Ni(AN)₂, Ni(acac)₂, Ni[Ph₂P(CH₂)₃PPh₂PhClMe, Ni[Ph₂P(CH₂)₃PPh₂]Br₂, Ni[Ph₂P(CH₂)₃PPh₂]Et₂, Ni[Ph₂P(CH₂)₃PPh₂]H₂, Ni(PPh₃)₂ClMe, Ni(PPh₃)₂HMe, Co(PPh₃)₂Me₂, Co(PPh₃)₂Cl₂, Co₂(CO)₈, Co[Ph₂P(CH₂)₂PPh₂]Me₂, Co(PPh₃)₂Br₂, Co(PPh₃)₂BrMe, Co(PPh₃)₂ClMe, Co(PPh₃)₂Et₂, Co[Ph₂P(CH₂)₃PPh₂]Me₂, Co[Ph₂P(CH₂PPh₂]ClMe, Co[Ph₂P(CH₂)₃PPh₂]Cl₂, Co[Ph₂P(CH₂)₃PPh2]ClMe, Co(CO)₄Me, Co(Cp)Cl₂, Co(Cp)Me₂, Co(πCH₂=CHCH₂)(CO)₃, Co(Cp)(CO)₂, Co(Cp)₂,[Co(Cp)₂]Br₃, [Co(Cp)₂]Cl, Co(PPh₃)(CO)₃Me, Co(PPh₃)₂H₂, Co(PPh₃)₂Br₂, Pd(PPh₃)₂Me₂, Pd(PPh₃)₂Cl₂, Pd(PPh₃)₂ClMe, Pd(PPh₃)₂H₂, Pd(PPh₃)₂Et₂, Pd(PPh₃)₂Br₂, Pd(PPh₃)₂BrMe, Pd(PPh₃)₂I₂, Pd(Cp)Br, Pd(Cp)Cl, Pd(AN)₂Cl₂, Pd(πCH₂=CHCH₂)₂, Pd(πCH₂=CHCH₂)₂Cl₂, Pd(Cp)(πCH₂=CHCH₂), Pd(COD)Cl₂, Pd(COD)Me₂, Pd(COD)ClMe, Pd(dip)Me₂, Pd(PEt₃)₂CNMe, Pd(PEt₃)₂Me₂, Pd(pMeOC₆H₄)₂Br₂, Pd[Ph₂P(CH₂)₂PPh₂]Me₂, Pd[Ph₂P(CH₂)₃PPh₂]Me₂, [Pd(πCH₂=CHCH₂)Cl]₂, [Pd(πCH₂=CHCH₂)Br]₂, Ru(PPh₃)₃Me₂, Ru(PPh₃)₃Cl₂, Ru(PPh₃)₃ClMe, Ru(PPh₃)₃Br₂, Ru(PPh₃)₃Et₂, Ru(PPh₃)₂ClMe₂, Ru(PPh₃)₃H₂, Ru(Cp)(CO)₂H, Ru(COD)Cl₂, Ru(Cp)(CO)₂Me, Ru(COD)Br₂, Ru(MeNC)₄Cl₂, Ru(Cp)(CO)₂Et, Ru(Cp)₂, Ru[Ph₂P(CH₂)₂PPh₂]₂ClMe, Ru[Ph₂P(CH₂)₃PPh₂]₂ClMe, Ru[Ph₂P(CH₂)₂PPh₂]₂ClPh, Ru(EtNC)₄Cl₂, Ru(EtNC)₄Br₂, Ru(EtNC)₄Me₂, Ru(EtNC)₄Et₂, Ru[Ph₂P(CH₂)₃PPh₂]₂BrMe, Ru[Ph₂P(CH₂)₂PPh₂]₂HMe, [Ru(Cp)(CO)₂]₂, Ir(PPh₃)₃(CO)Me, Ir(PPh₃)₃(CO)H, Ir(Cp)(CO)₂, Ir(Cp)₂Br₃, Ir(PPh₃)₃Me₂, Ir(PPh₃)₃Cl₂, Ir(PPh₃)₃ClMe, Ir(PPh₃)₃H₂, Ir[Ph₂P(CH₂)₂PPh₂]Me₂, Ir[Ph₂P(CH₂)₂PPh₂](CO)Me, Ir(PPh₃)₂(CO)MeClI, Ir(πCH₂=CHCH₂)(PPh₃)₂Cl₂, Ir[p-CH₃C₄H₆NC)₄Cl, Ir(acac)(COD).

Mit COD = Cyclooctadien; Cp = Cyclopentadienyl; dip = bipyridyl; Ph = phenyl; AN = Acrylnitril; acac = Acetylacetonat; Py = Pyridin; Me = Methyl, Et = Ethyl; Bu = Butyl.

Diese Übergangsmetallverbindungen dienen als Katalysator. Sie können sowohl als heterogener Katalysator, gegebenenfalls auf einem Träger aufgebracht, oder als homogener Katalysator gelöst im Reaktionsgemisch vorliegend, eingesetzt werden.

Die Katalysatorkonzentration kann 0,0001 bis 1 mol/l betragen. Bevorzugt kann ein Bereich von 0,001 bis 0,1 mol/l sein.

Die besten Ergebnisse werden mit homogenen Katalysatoren erhalten. In diesem Fall können die Übergangsmetallverbindungen selbst dem Reaktionsgemisch hinzugefügt werden oder die Übergangsmetallverbindungen bilden sich erst im Reaktionsgemisch, indem man eine Übergangsmetallverbindung, beispielsweise Acetate, und einen Liganden getrennt zum Reaktionsgemisch gibt.

Bei der zweiten Ausführungsform wird in der Regel ein molarer Überschuss des Liganden eingesetzt. Besonders geeignet können hierbei die Systeme
Bis(1,5-cyclooctadien)nickel(0),
1,2-Bis(diphenylphosphino)ethan;
Bis(1,5-cyclooctadien)nickel(0),
trans-1,2-Bis(diphenylphosphino)ethylen;
Rhodium(II)acetat Dimer,
2,2'-Bis(diphenylphosphino)-1,1'-binaphthyl; sein.

Das erfindungsgemäße Verfahren wird bei einem Druck von mindestens 5 bar absolut durchgeführt. Bevorzugt ist ein Bereich von 20 bis 200 bar absolut. Unterhalb von 20 bar absolut sind die Umsätze oft nicht zufriedenstellend, oberhalb 200 bar absolut rechtfertigen die materialtechnischen Anforderungen den Aufwand nicht.

Die Temperatur bei der das erfindungsgemäße Verfahren durchgeführt wird ist nicht kritisch. In der Regel kann man das Verfahren bei Temperaturen von -50°C bis 200°C durchführen. Bevorzugt ist ein Bereich von 0°C bis 120°C und besonders bevorzugt ist ein Bereich von 20°C bis 80°C.

Die Reaktionszeit kann wenige Stunden bis zu mehreren Tagen betragen. Der Anteil höherer Silane nimmt mit der Reaktionszeit zu.

Das erfindungsgemäße Verfahren kann weiterhin in Gegenwart eines Lösungsmittels durchgeführt werden. Geeignet sind prinzipiell alle Lösungsmittel, die weder mit den Einsatzstoffen noch mit den Produkten reagieren, falls ein homogener Katalysator eingesetzt wird, diesen lösen. Beispiele sind aliphatische und aromatische Kohlenwasserstoffe, beispielsweise Benzol oder Toluol, Ether, wie beispielsweise Dialkylether, Furane oder Dioxane, sowie Dimethylformamid, Ethylacetat oder Butylacetat.

Die Abtrennung der höheren Hydridosilane vom Reaktionsgemisch kann nach den dem Fachmann bekannten Verfahren erfolgen. So können beispielsweise Lösungsmittel oder nicht umgesetztes Ausgangsmaterial, beispielsweise Monosilan, destillativ abgetrennt werden. Weiterhin können adsorptive Verfahren eingesetzt werden.

Ein weiterer Gegenstand der Erfindung ist die Verwendung der nach dem erfindungsgemäßen Verfahren erhältlichen höheren Hydridosilane zur Erzeugung einer ladungstransportierenden Komponente in optoelektronischen und elektronischen Bauteilen.

### Beispiele

Katalysatorlösung: Übergangsmetallverbindung und ein 1,1 facher molarer Überschuss an Ligand werden unter Schutzgas (Argon) eingewogen und in 30 ml getrocknetem Toluol bei Raumtemperatur gelöst.

In einem inertisierten, mit Glasliner, Thermoelement, Druckaufnehmer, Flüssigprobennahmestelle, Gaszuführung und Gasabführung ausgestatteten Edelstahlautoklaven wird die Katalysatorlösung vorgelegt. Über die Gaszuführung wird der Autoklav mit einer entsprechenden Menge Monosilan beaufschlagt. Im Anschluss wird der Reaktor auf die gewünschte Temperatur geheizt und der Rührer (700 U/min) gestartet. Nach einer Reaktionszeit von 1 h, 20 h und 67 h erfolgt eine Flüssigprobennahme, die gaschromatographisch analysiert wird.

In Tabelle 1 sind die Einsatzstoffe, -mengen und Reaktionstemperatur angegeben.

In Tabelle 2 sind die Ausbeuten, in Flächen-% GC, der erhaltenen höheren Hydridosilane angegeben.

Die Vergleichsbeispiele 15 und 16 werden analog durchgeführt, jedoch wird kein Wasserstoff eingesetzt. Hierbei entstehen keine höheren Hydridosilane, sondern lediglich selbstentzündliche Feststoffe.

**Tabelle 1: Einsatzstoffe und Einsatzstoffmengen**

| **Bsp** | | | **p**_{SiH4} | **p**_{H2} | **T** |
|---|---|---|---|---|---|
| | **Gemäß Erfindung** | **mg** | **bar** | **bar** | **°C** |
| 1 | Bis (1,5-cyclooctadien) nickel (0) | 6, 30 | 80 | 20 | 40 |
| | 1,2-Bis(diphenylphosphino)ethan | 15,03 | | | |
| 2 | Bis(1,5-cyclooctadien)nickel(0) | 6,09 | 80 | 20 | 40 |
| | trans-1,2- | 10,00 | | | |
| | Bis(diphenylphosphino)ethylen | | | | |
| 3 | Rhodium(II)acetat dimer, | 10,12 | 67 | 20 | 40 |
| | (±)-2,2'-Bis(diphenylphosphino)- | 43,48 | | | |
| | 1,1'-binaphthyl | | | | |
| 4 | Rhodium(II)acetat dimer, | 11,18 | 67 | 20 | 40 |
| | (±)-2,2'-Bis(diphenylphosphino)- | 34,75 | | | |
| | 1,1'-binaphthyl | | | | |
| 5 | Rhodium(II)acetat dimer, | 10,84 | 67 | 20 | 40 |
| | (±)-2,2'-Bis(diphenylphosphino)- | 32,9 | | | |
| | 1,1'-binaphthyl | | | | |
| 6 | Rhodium(II)acetat dimer, | 11,67 | 67 | 30 | 40 |
| | (±)-2,2'-Bis(diphenylphosphino)- | 36,28 | | | |
| | 1,1'-binaphthyl | | | | |
| 7 | Rhodium(II)acetat dimer, | 10,51 | 67 | 30 | 40 |
| | (±)-2,2'-Bis(diphenylphosphino)- | 33,38 | | | |
| | 1,1'-binaphthyl | | | | |
| 8 | Rhodium(II)acetat dimer, | 11,45 | 65 | 5 | 40 |
| | (±)-2,2'-Bis(diphenylphosphino)- | 33,04 | | | |
| | 1,1'-binaphthyl | | | | |
| 9 | Nickel(II)acetylacetonat* | 6,65 | 60 | 20 | 40 |
| | Tricyclohexylphosphin | 30,38 | | | |
| 10 | Nickel(II)acetylacetonat* | 6 | 60 | 20 | 40 |
| | [Tris(trimethylsilyl)]phosphin | 27,51 | | | |
| 11 | Nickel(II)acetylacetonat* | 7,23 | 60 | 20 | 40 |
| | Triphenylphosphin | 38,67 | | | |
| 12 | Nickel(II)acetylacetonat* | 6,38 | 60 | 20 | 40 |
| | 2,2-Ditert.-butylphenylphosphit | 67,48 | | | |
| 13 | Nickel(II)acetylacetonat* | 8,01 | 60 | 20 | 40 |
| | Tri-t-butylphosphin | 23,89 | | | |
| 14 | Nickel(II)acetylacetonat* | 6,84 | 60 | 20 | 40 |
| | (±)-2,2'-Bis(diphenylphosphino)- | | | | |
| | 1,1'-binaphthyl | 32,33 | | | |

| | **Vergleichsbeispiele** | | | | |
|---|---|---|---|---|---|
| 15 | Bis(1,5-cyclooctadiene)nickel(0) | 32,4 | 17 | 0 | 110 |
| | 1,2-Bis(diphenylphosphino)ethan | 57,9 | | | |
| 16 | Rhodium(II)acetat dimer, | 49,7 | 20 | 0 | 110 |
| | (±)-2,2'-Bis(diphenylphosphino)- | 112,1 | | | |
| | 1,1'-binaphthyl | | | | |

| | | | | | |
|---|---|---|---|---|---|
| * wasserfrei | | | | | |

**Tabelle 2: Reaktionsprodukte**

| **Bsp** | **RZ*** | **Disilan** | **Trisilan** | **Tetrasilan** | **Pentasilan** | **>Si**ₙ**H**₍₂ₙ₊₂₎ **mit n>5** |
|---|---|---|---|---|---|---|
| | **h** | **Fl.**-% **GC** | | | | |

| Gemäß Erfindung | | | | | | |
|---|---|---|---|---|---|---|
| 1 | 20 | 74,0 | 21,9 | 4,1 | 0,0 | 0,0 |
| 2 | 20 | 75,2 | 20,2 | 4,6 | 0,0 | 0,0 |
| 3 | 2,5 | 78,8 | 18,4 | 2,8 | 0,0 | 0,0 |
| | 67 | 62,2 | 21,8 | 8,7 | 7, 3 | 0,0 |
| 4 | 2,5 | 81,4 | 16,2 | 2,4 | 0,0 | 0,0 |
| | 67 | 46,9 | 23,4 | 15,2 | 9,1 | 5,2 |
| 5 | 2,5 | 73,7 | 21,1 | 5,2 | 0,0 | 0,0 |
| | 67 | 50,4 | 24,6 | 14,5 | 7,8 | 2,8 |
| 6 | 2,5 | 73,6 | 21,2 | 5,2 | 0,0 | 0,0 |
| | 67 | 56,2 | 23,3 | 12,1 | 6,6 | 1,7 |
| 7 | 2,5 | 75,8 | 19,6 | 4,5 | 0,0 | 0,0 |
| | 67 | 49,4 | 25,2 | 14,5 | 7,8 | 3,1 |
| 8 | 2,5 | 66,5 | 25,8 | 7,7 | 0,0 | 0,0 |
| | 67 | 47,8 | 24,3 | 14,8 | 8,5 | 4,6 |
| 9 | 1 | 100,0 | 0,0 | 0,0 | 0,0 | 0,0 |
| | 20 | 100,0 | 0,0 | 0,0 | 0,0 | 0,0 |
| 10 | 1 | 96,6 | 0,0 | 3,4 | 0,0 | 0,0 |
| | 20 | 69,0 | 23,4 | 5,7 | 1,8 | 0,0 |
| 11 | 1 | 90,6 | 0,0 | 7,0 | 2,4 | 0,0 |
| | 20 | 66,1 | 28,6 | 4,0 | 1,3 | 0,0 |
| 12 | 1 | 56,1 | 0,0 | 43,9 | 0,0 | 0,0 |
| | 20 | 39,6 | 45,3 | 8,2 | 6,8 | 0,0 |
| 13 | 1 | 100,0 | 0,0 | 0,0 | 0,0 | 0,0 |
| | 20 | 71,2 | 24,7 | 4,1 | 0, 0 | 0,0 |
| 14 | 1 | 33,0 | 33,0 | 18,7 | 10,3 | 4,9 |
| | 20 | 29,8 | 24,5 | 19,2 | 14,1 | 12,4 |

| Vergleichsbeispiele | | | | | | |
|---|---|---|---|---|---|---|
| 15 | 20 | 0 | 0 | 0 | 0 | 0 |
| 16 | 20 | 0 | 0 | 0 | 0 | 0 |

| | | | | | | |
|---|---|---|---|---|---|---|
| * RZ = Reaktionszeit | | | | | | |

## Patentansprüche

1. Verfahren zur Herstellung höherer Hydridosilane der allgemeinen Formel H-(SiH₂)ₙ-H wobei n ≥ 2 ist, **dadurch gekennzeichnet, dass** man
- ein oder mehrere niedere Hydridosilane
- Wasserstoff und
- ein oder mehrere Übergangmetallverbindungen umfassend Elemente der VIII. Nebengruppe des Periodensystemes und der Lanthanoide,
bei einem Druck von mehr als 5 bar absolut zur Reaktion bringt, nachfolgend entspannt und vom erhaltenen Reaktionsgemisch die höheren Hydridosilane abtrennt.

2. Verfahren nach Anspruch 1, **dadurch gekennzeichnet, dass** man Monosilan einsetzt.

3. Verfahren nach den Ansprüchen 1 oder 2, **dadurch gekennzeichnet, dass** der Partialdruck des Wasserstoffes 5% bis 80% des Gesamtdruckes entspricht.

4. Verfahren nach den Ansprüchen 1 bis 3, **dadurch gekennzeichnet, dass** das Übergangsmetall Co, Ir, Ni, Pd, Rh oder Ru ist.

5. Verfahren nach den Ansprüchen 1 bis 4, **dadurch gekennzeichnet, dass** die Übergangsmetallverbindung als Liganden Bipyridyl, unsubstituiertes oder substituiertes Cyclopentadienyl, Cyclooctadien, CN, CO, Alkylphosphin, Arylphosphine, Alkyl- oder Arylphosphite, Alkylarylphosphin, bidentate Phosphinliganden mit verbrückenden Heterocyclen oder verbrückenden Arylresten, einen heteroatomhaltigen Liganden, besonders bevorzugt einen phosphorhaltigen Liganden, der die Fähigkeit Atropisomerie bezüglich zweier Aryl- bzw. Hetarylsysteme auszubilden aufweist, Alkyldiphosphin R²R¹-P(CH_{y})ₓP-R³R⁴, wobei R¹ , R²,R³ und R⁴ unabhängig voneinander Alkyl oder Aryl und x = 1-10 ist und y=0,1 oder 2 sein kann, R²R¹-P-CR⁵R⁶(CR⁷R⁸)x-CR⁹R¹⁰-P-R³R⁴ wobei R¹ R²,R³,R⁴, R⁵, R⁶, R⁷, R⁸, R⁹, R¹⁰ unabhängig voneinander H, Alkyl oder Aryl und x = 1-10 ist; R¹-C≡C-R², wobei R¹ und R² unabhängig voneinander Alkylphosphine oder Arylphosphine sind oder einen heteroatomhaltigen Liganden aufweist.

6. Verfahren nach den Ansprüchen 1 bis 5, **dadurch gekennzeichnet, dass** der Druck 20 bis 200 bar absolut ist.

7. Verfahren nach den Ansprüchen 1 bis 6, **dadurch gekennzeichnet, dass** die Temperatur -50°C bis 200°C beträgt.

8. Verfahren nach den Ansprüchen 1 bis 7, **dadurch gekennzeichnet, dass** ein Bestandteil der flüssigen Phase ein Lösungsmittel ist.

9. Verwendung der nach dem Verfahren gemäß der Ansprüche 1 bis 8 erhältlichen höheren Hydridosilane zur Erzeugung einer ladungstransportierenden Komponente in optoelektronischen und elektronischen Bauteilen.
